(19) Europäisches Patentamt
European Patent Office
Office européen des brevets

(11) **EP 1 729 404 B1**

(12) **FASCICULE DE BREVET EUROPEEN**

(45) Date de publication et mention
de la délivrance du brevet:
**03.02.2010 Bulletin 2010/05**

(51) Int Cl.:
***H02N 2/10*** *(2006.01)*   ***H01L 41/09*** *(2006.01)*

(21) Numéro de dépôt: **06114653.6**

(22) Date de dépôt: **29.05.2006**

(54) **Perfectionnements aux rotors de moteurs hautes puissances**

Verbesserungen an Rotoren von Hochleistungsmotoren

Improvements of rotors of high power motors

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **31.05.2005 FR 0505474**

(43) Date de publication de la demande:
**06.12.2006 Bulletin 2006/49**

(73) Titulaire: **SAGEM Défense Sécurité**
**75015 Paris (FR)**

(72) Inventeurs:
• **D'Almeida, Oscar**
**92100 Boulogne Billancourt (FR)**

• **Woydt, Mathias**
**13465 Berlin (DE)**
• **Audren, Jean-Thierry**
**78470 Saint Rémy les Chevreuse (FR)**

(74) Mandataire: **Callon de Lamarck, Jean-Robert et al**
**Cabinet Regimbeau**
**20 rue de Chazelles**
**75847 Paris cedex 17 (FR)**

(56) Documents cités:
**EP-A- 0 136 508**   **FR-A- 2 844 933**
**US-A1- 2004 156 739**

• **PATENT ABSTRACTS OF JAPAN vol. 1996, no. 06, 28 juin 1996 (1996-06-28) -& JP 08 037782 A (ASAHI TEC CORP), 6 février 1996 (1996-02-06)**

**Description**

DOMAINE TECHNIQUE GENERAL

La présente invention concerne l'application de matériaux dans des moteurs hautes puissances ou à vibrations.

Plus précisément, elle concerne l'application de matériaux pour deux corps dans des moteurs hautes puissances ou à vibrations, le premier corps (patin) étant mis en contact en frottement à sec avec le deuxième corps (rotor), des matériaux de friction étant à l'interface entre ces deux corps.

ETAT DE LA TECHNIQUE

Certains moteurs hautes puissances utilisent dans leur fonctionnement les propriétés d'élongation de matériaux actifs. Ces matériaux peuvent par exemple être des matériaux du type piézo-électrique, du type magnéto-strictif, électro-strictif, etc.

De tels moteurs sont connus notamment du document FR 2 782 420.

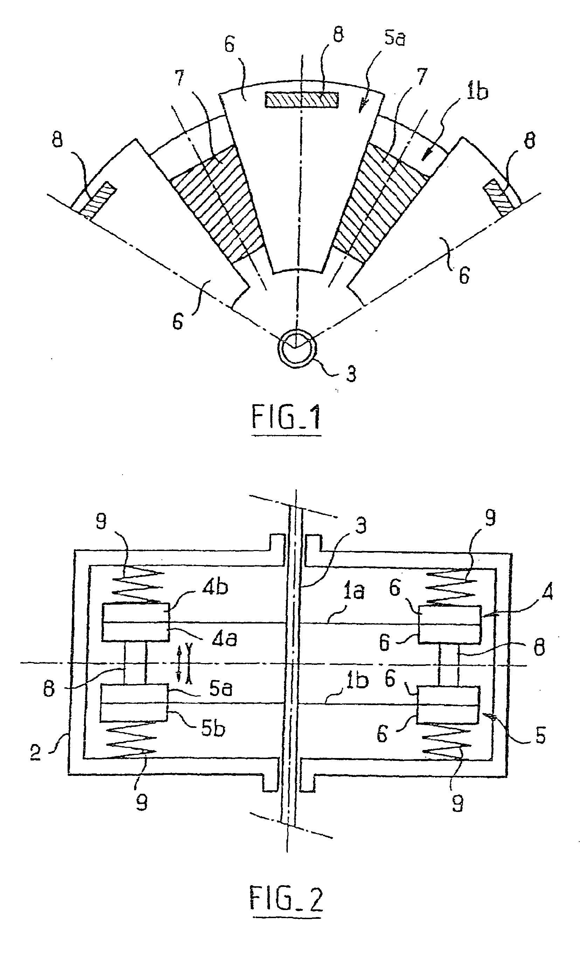

Les figures 1 et 2 représentent schématiquement exemple connu d'un moteur 2 haute puissance comportant des blocs 4a, 4b, 5a, 5b de forme sensiblement circulaire, et deux rotors 1a et 1b, l'un étant interposé entre les blocs 4a et 4b, et l'autre entre les blocs 5a et 5b.

Les rotors 1a et 1b sont montés sur un arbre commun 3.

Les blocs 4a, 4b, 5a, 5b comportent des pétales 6 aptes à être mis en contact avec les rotors 1a et 1b.

Les blocs 4a, 4b, 5a, 5b comportent des éléments en matériaux actifs 7 interposés entre les pétales 6, et qui subissent des élongations dans le plan des blocs, afin de mettre en mouvement les pétales 6.

Les blocs les plus internes 4a et 5a sont reliés entre eux, par l'intermédiaire des pétales 6, par des éléments 8 en matériaux actifs. Ces éléments sont aptes à se déformer et déplacer les pétales 6 selon le sens des flèches visibles sur la figure 2.

Les blocs les plus externes 4b et 5b sont reliés au carter du moteur 2, par l'intermédiaire des pétales 6, par des éléments 9 formant ressorts.

Les élongations synchronisées des éléments 7 et 8 permettent de mettre en rotation les rotors 1a et 1b, notamment par la présence de frottement entre les pétales 6 et les rotors 1a et 1b.

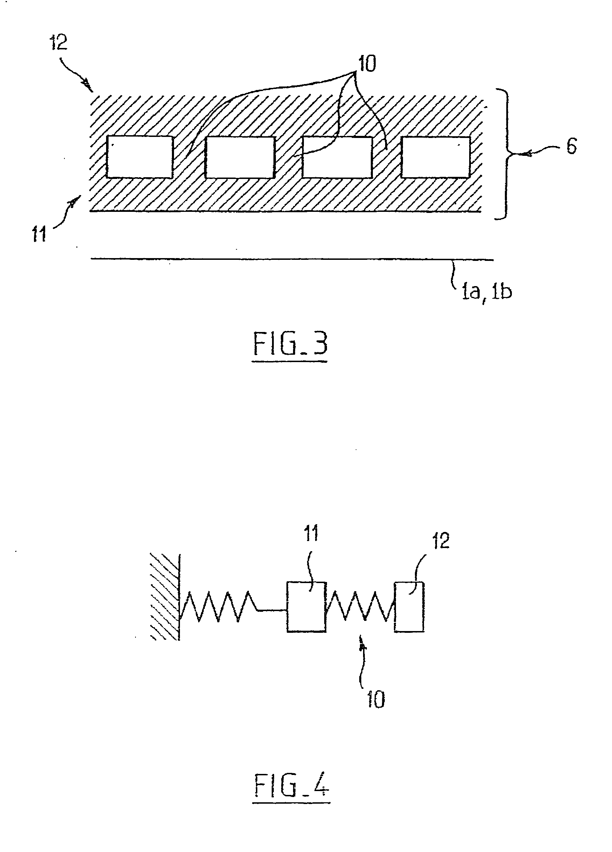

La figure 3 montre schématiquement que les pétales 6 comportent une partie principale 12, relié à un patin de contact 11 par des éléments intermédiaires 10 présentant des propriétés élastiques.

Le fait que la partie principale ne soit pas directement en contact avec les rotors 1a et 1b, et qu'une partie intermédiaire 10 présente des propriétés de déformation élastique permet d'augmenter le rendement du moteur à vibrations. En effet, l'ensemble 12, 10, 11 forme un ensemble double masse-ressort représenté à la figure 4.

Si les patins de contact 11 sont dimensionnés correctement, le rendement du moteur à vibrations est grandement augmenté. Dans la suite de la présente description, on appellera également masselotte les patins de contact, en référence au fait que les patins représentent des masselottes dans l'ensemble double masse-ressort de la figure 4.

Ainsi, la masselotte, qui a une masse limitée et fixe pour obtenir un bon rendement d'utilisation du moteur, comporte à sa surface une couche frottante, en contact avec un rotor. L'épaisseur de la masselotte est de l'ordre de 2 mm. En variante, la masselotte peut frotter directement sans la présence d'une couche frottante.

Généralement, les éléments intermédiaires 10 présentent une conductivité thermique $\lambda$ faible ($\lambda < 0,5$ W/mK).

Les moteurs à vibrations représentent un attrait pour les actionneurs intermittents, comme par exemple les systèmes de trains d'atterrissage, de porte cargos, de gouvernails et de volets. Ils sont alors utilisés en remplacement des circuits hydrauliques ou pneumatiques, qui exigent des liquides ayant des points d'écoulement inférieurs à -60°C. Or les liquides présentent des risques d'inflammation, doivent être vidangés et mis en décharge régulièrement. Les moteurs à vibrations sont également utilisés en remplacement des moteurs électriques utilisant des matériaux ferromagnétiques ferreux comportant des réducteurs de vitesse à engrenages.

Les systèmes comportant des actionneurs intermittents ont besoin d'un fort couple à basse vitesse.

La demande FR 2 819 650, propose des couples de friction dans des actionneurs linéaires dont la structure et l'application sont très différentes, de celles des moteurs hautes puissances. Cependant, les couples de friction de la demande FR 2 819 650 ont des propriétés stables en fonction des conditions de fonctionnement. Lesdits couples de friction sont sollicités sans glissement par écrasement élastique des microaspérités. En effet, ils sont utilisés dans des systèmes de blocage dont le but est d'éviter le glissement du microcontact. Ils ne possèdent pas de propriétés de dissipation calorifique importantes, puisqu'ils n'ont pas à dissiper les quantités de chaleur importantes induites par des phases de glissement.

Par ailleurs, la durée de fonctionnement accumulée d'un avion civil est de l'ordre de 48 000 heures de vol. Pour les matériaux de friction de la masselotte et du rotor d'un moteur haute puissance, cela représente des sollicitations avec vie accumulée de 2 000 heures. Il faut donc des taux d'usure $k_v$ inférieurs à $3 \times 10^{-8}$ mm³/Nm. On rappelle que le taux d'usure est utilisé internationalement en Tribologie pour qualifier le comportement à l'usure. Il est défini par le volume d'usure divisé par la charge normale et la distance de glissement reliée au volume d'usure. Ces taux d'usure doivent être indépendants de la température et des conditions d'utilisation, ainsi qu'indépendants de la vitesse de glissement. De la même façon, pour des applications dans des véhicules industriels, même si les heures d'opérations sont généralement limitées à 20 000 heures, la vie accumulée se situe également autour de 2 000 heures.

On l'aura compris, le cahier des charges d'un moteur haute puissance mentionnent donc des faibles taux d'usure et de forts coefficients de frottement. De plus, les matériaux de friction doivent présenter des propriétés calorifiques, et notamment de diffusivité thermique $\kappa$ [en mm$^2$/s] importantes pour les matériaux surtout du rotor.

En effet, la température de Curie limite l'effet actif, notamment piézo-électrique. Ainsi, si la température s'élève de façon trop importante dans le moteur haute puissance, son fonctionnement est altéré. La contrainte de ne pas atteindre la température de Curie limite la température d'échauffement de la masselotte à environ 150°C et celle du rotor à 200°C. Le rotor peut tolérer une température plus importante car il n'est pas relié à des éléments sensibles à la température, notamment des matériaux piézo-électriques, et car il est relié à un axe qui constitue un moyen de dissiper la chaleur plus rapidement.

La montée en température au-dessus des températures de Curie des matériaux piézo-électriques ne peut être négligée dans une application de long actionnement, générant jusqu'à plusieurs centaines de kJoules à dissiper. Indépendamment de la conception et du mode d'opération, les matériaux choisis pour les patins/masselottes et pour le rotor doivent être capables d'emmagasiner le maximum de la chaleur due aux pertes frictionnelles, car un refroidissement des éléments en matériaux actifs 7 par ventilation ou aération n'est pas possible.

FR 2 844 933 propose d'une part des matériaux de friction et couches frictionnelles qui répondent en même temps à plusieurs contraintes. Les matériaux des couches frictionnelles présentent :

- de bonnes propriétés de frottement et des faibles taux d'usure;
- de bonnes propriétés calorifiques ;
- une bonne répartition du flux de chaleur ;
- de bonnes propriétés mécaniques, notamment une bonne résistance à la fatigue ; et
- de bonnes propriétés anti-corrosion.

FR 2 844 933 propose d'autre part des matériaux pour les masselottes/patins ainsi que pour le rotor/disque.

Pour les niasselottes/patins, les matériaux proposés par FR 2 844 933 ont une capacité massique thermique supérieure à 0,5 J/g/K. Il s'agit notamment préférentiellement :

- du MgO-ZrO$_2$,
- de l'alumine renforcé par du zircone,
- du (Ti,Mo)(C,N) avec des liants avec 8-20 % en poids de NiMo (nuances TM 8,10, ou 20 par exemple),
- du SiSiC,
- du WC-6Ni et/ou
- de l'AIN.

Pour le rotor/disque, il s'agit de matériaux monolithiques ayant une capacité thermique volumique supérieure à 2,5 J/cm$^3$/K, notamment préférentiellement :

- le (Ti,Mo)(C,N) avec des liants avec 8-20 % en poids de NiMo (nuances TM 8,10 ou 20 par exemple),
- le WC-6Ni,
- le AIN,
- le SiSiC,
- les fontes grises globulaires, lamellaires et en trempe bainitique,
- les aciers du type Z6CND16-05-01 et du type X5CrNiCu15-5,
- les alliages AlSi + SiC/Al$_2$O$_3$,
- les alliages AlSi + du dispersoïdes Al$_4$C$_3$/Al$_2$O$_3$,
- les alliages Al-Fe-V,
- l'aluminium série 6xxx en T8 et série 7xxx,
- le TiAl6V4, DIN 3.7xxx.

Le matériau pour le rotor/disque peut éventuellement être revêtu par exemple par:

- des phases magnéli Ti$_n$O$_{2n-1}$, avec $4 \leq n \leq 10$, par exemple du 40%Ti$_4$O$_7$/60%Ti$_5$O$_9$,
- du 4-6Al$_2$O$_3$/6-4TiO$_2$,

- du WC-17%Co,
- du (Ti,Mo)(C,N) ou du (Ti,W)(C,N) avec des liants Ni/Mo, et/ou
- du >75Cr$_3$C$_2$/<25NiCr.

La capacité calorifique des matériaux pour le rotor/disque n'est pas optimale et on cherche à encore à l'améliorer, notamment par un choix de matériaux plus performants que ceux divulgués dans FR 2 844 933.

De plus, certains de ces matériaux ne peuvent pas être utilisés dans certains cas de températures ou de sollicitations. Par exemple, l'inconvénient majeur des alliages en aluminium divulgués dans FR 2 844 933, comme les séries 6xxx en T8 et 7xxx, ainsi que AlSi, AlMg et AlZn renforcés ou non-renforcés, est la chute de la résistance à la rupture avec la température. Cette chute limite l'utilisation de ces alliages à une température maximale de 300°C, voire 250°C. De plus, il existe un risque de formation de phases liquides à partir de 370°C.

En outre, FR 2 844 933 ne prévoit que la répartition de la chaleur frictionnelle entre le rotor/disque et le patin. La capacité calorifique de l'ensemble rotor/disque sur son arbre n'est pas optimale et on cherche à encore à l'améliorer. FR 2 844 933 n'envisage pas une structure d'un tel ensemble.

Enfin, un moteur dans un système de sécurité est un système qui doit toujours fonctionner, dans n'importe quelle condition. Or il a été constaté que les phases magnéli Ti$_n$O$_{2n-1}$, avec $4 \leq n \leq 10$, s'oxydent au-dessus de 360°C en présence d'air pour donner la phase stoechiométrique TiO$_2$. Ce phénomène d'oxydation s'accélère en présence d'humidité.

## PRESENTATION DE L'INVENTION

L'invention propose de pallier au moins un des inconvénients précités.

A cet effet, l'invention propose un système, notamment adapté pour les moteurs hautes puissances, comportant au moins un rotor et des moyens comportant des éléments actifs aptes à mettre en rotation le/les rotor(s) par leur déformation synchronisée, caractérisé en ce le matériau du rotor est choisi parmi :

- un alliage Al-Fe-V-Si, avec entre 0,1 et 15% en poids de Fe, entre 0,3 et 15% en poids de V, entre 0,1 et 5% en poids de Si, le reste étant du Al ; et/ou
- un alliage Al-Fe-Ce, avec entre 0,1 et 15 % en poids de Fe, entre 0,1 et 9 % en poids de Ce, le reste étant du Al ; et/ou
- un alliage Al-Fe-Mo, avec entre 0,1 et 15 % en poids de Fe, entre 0,3 et 9 % en poids de Mo, le reste étant du Al ; et/ou
- un alliage de Al-Yb/Gd- et de terres rares, avec entre 1,0 et 20 % en poids de Yb ou de Gd, et entre 0,1 et 1,0 % en poids de terres rares; et/ou
- un alliage Al-Fe-Cr-Ti, avec entre 0,5 et 10 % en atomes de Fe, entre 0,4 et 8% en atomes de Cr, entre 0,3 et 5% en atomes de Ti, le reste étant du Al; et/ou
- un alliage Al-Fe-V, avec entre 0,1 et 15 % en poids de Fe, entre 0,1 et 5 % en poids de V, le reste étant du Al, l'alliage comportant des grains affinés et homogénéisés et comportant une quantité inférieure à 0,3 % en poids par rapport au poids total de l'alliage de Mg, Zr, Ce et/ou Sr (inoculation) et/ou une quantité inférieure à 0,05 % en poids de Ni, l'alliage étant préférentiellement l'alliage Al-12Fe-3V..

L'invention est avantageusement complétée par les caractéristiques suivantes, prises seules ou selon leurs combinaisons possibles :

- l'alliage est l'alliage AA 8009, à savoir Al-8,5Fe-1,3V-1,7Si, et/ou l'alliage Al-8,3Fe-4,0Ce et/ou Al-7,0Fe-6,0Ce et/ou l'alliage Al-8Fe-2Mo et/ou l'alliage Al14Yb4Y et/ou l'alliage Al84,5Fe7Cr6,3Ti2,5;
- l'alliage présente des grains affinés et homogénéisés et comporte une quantité inférieure à 0,3 % en poids par rapport au poids total de l'alliage de Mg, Zr, Ce et/ou Sr (inoculation) et/ou une quantité inférieure à 0,05 % en poids de Ni ;
- le matériau de chaque rotor (1a; 1b) est tel qu'il présente une capacité calorifique supérieure à 2 J/cm$^3$/K ;
- lesdits moyens de mise en rotation du/des rotor(s) comportent au moins un pétale comportant une masselotte, le matériau de chaque masselotte étant tel qu'elle présente une capacité thermique massique Cp$^{22c}$ supérieure à 0,35 J/g/K;
- le matériau de chaque masselotte comporte :

  - du (Ti,Mo)(C,N) + 8-20 % de liant Ni/Mo nuances TM 8,10, ou 20 par exemple; et/ou
  - du WC-6Ni ; et/ou
  - de l'alumine renforcée par de la zircone; et/ou
  - de l'AlN ; et/ou
  - du carbure de silicium infiltré au silicium SiSiC, avec 8-20% en poids de silicium ; et/ou

- MgO-ZrO$_2$ ; et/ou
- de l'alumine renforcée par de la zircone; et/ou
- du nitrure l'aluminium par frittage à chaud; et/ou
- du nitrure l'aluminium par frittage sous pression ; et/ou-
- une phase magnéli du type Ti$_n$O$_{2n-1}$, 4≤n≤10 avec n entier, ou des mélanges du type 40%Ti$_4$O$_7$/60%Ti$_5$O$_9$.
- des fontes grises globulaires et/ou des fontes grises lamellaires et/ou avec une trempe bainitique et/ou alliées par Cr, Mo, Al, V, Ti ; et/ou
- des aciers du type Z6CND16-05-01 ; et/ou
- des aciers X5CrNiCu15-5 ; et/ou
- des alliages AlSi + SiC/Al$_2$O$_3$ ; et/ou
- des alliages AlSi + dispersoïdes Al$_4$C$_3$/Al$_2$O$_3$/TiB$_2$; et/ou
- des alliages Al-Fe-V ; et/ou
- de l'aluminiums série 6xxx en T6 et plus ou de série 7xxx ; et/ou
- du carbure de silicium infiltré au silicium SiSiC ; et/ou
- des alliages de titanium de type UNS R5xxxx, tels que TiAi6V4.

- le matériau de chaque masselotte et de chaque rotor est revêtu d'au moins une couche dure en projection thermique par un matériau qui comporte :

  - un oxyde d'un alliage de Ti et de Cr, l'oxyde étant sous forme d'une solution solide stabilisée et/ou sous forme d'une solution solide non-stoechiométrique ; et/ou
  - du WC-17%Co ; et/ou
  - du (Ti,Mo)(C,N) ou (Ti,W)(C,N) + un liant Ni/Mo ; et/ou
  - du >75Cr$_3$C$_2$/<25NiCr ; et/ou
  - du 4-6Al$_2$O$_3$/6-4TiO$_2$.

- la solution solide stabilisée de l'oxyde de l'alliage de Ti et de Cr se présente sous la forme Ti$_{n-2}$Cr$_2$O$_{2n-1}$ avec 6≤n≤9 et/ou dans lequel la forme non-stoechiométrique de l'oxyde de l'alliage de Ti et de Cr se présente sous la forme d'une solution solide de TiO$_2$ et Cr$_2$O$_3$, préférentiellement sous une forme choisie parmi : Cr$_2$Ti$_2$O$_7$, Ti$_6$Cr$_2$O$_{15}$, Ti$_7$Cr$_2$O$_{17}$, Cr$_2$Ti$_8$O$_1$, Cr$_2$Ti$_5$O$_{13}$, Cr$_2$Ti$_4$O$_{11}$, Cr$_{0.12}$Ti$_{0.78}$O$_{1.74}$, Cr$_{0.222}$Ti$_{0.778}$O$_{1.889}$, Cr$_{0.286}$Ti$_{0.714}$O$_{1.857}$ ou Cr$_{0.46}$Ti$_{0.54}$O$_{1.77}$.
- les couches dures déposées par projection thermique présentent des rugosités arithmétiques finales inférieures à 0,04 $\mu$m, l'épaisseur des couches usinées étant supérieure à 50 $\mu$m et/ou dans lequel les valeurs des rugosités R$_{pK}$ et R$_{vK}$ de la norme DIN EN ISO 13565-2:1998 sont inférieures à 0,030 $\mu$m et 0,070 $\mu$m respectivement ;
- le rotor et un arbre de rotation du rotor sont monobloc et sont composés du même matériau ;
- un carter de protection du moteur est relié à l'arbre de rotation et est composé du même matériau que le rotor.

L'invention présente de nombreux avantages.

La capacité du rotor/disque est améliorée du fait du choix de matériaux ayant une grande capacité calorifique et une bonne conduction thermique.

La capacité calorifique du rotor/disque est encore améliorée grâce à la conduction thermique vers l'arbre du moteur (voire vers le carter), qui lui-même possède une masse thermique capable d'emmagasiner les pertes frictionnelles.

L'amélioration de la capacité calorifique du rotor/disque d'une part et de l'ensemble rotor/disque + arbre (voire carter) d'autre part, rendu possible grâce à l'utilisation d'alliages avec une diffusivité thermique K [mm$^2$/s] élevée, tels que les alliages en aluminium, permet une meilleure protection des éléments en matériaux actifs 7, et par conséquent une meilleure sécurité et une durée de vie du moteur plus longue.

De plus, l'emploi des matériaux selon l'invention permet une fabrication plus simple et moins onéreuse des pièces du moteur.

Enfin, l'invention permet une utilisation du moteur sur une gamme de sollicitations, de températures et d'humidité plus importantes.

PRESENTATION DES FIGURES

D'autres caractéristiques, buts et avantages de l'invention ressortiront de la description qui suit qui est purement illustrative et non limitative et qui doit être lue en regard des figures annexées sur lesquelles

- la figure 1. déjà commentée, représente schématiquement une vue en élévation d'un moteur haute puissance ;

- la figure 2, déjà commentée, représente schématiquement une vue de profil d'un moteur haute puissance ;
- la figure 3, déjà commentée, représente schématiquement une vue en coupe d'un pétale d'un moteur à vibrations ; et
- la figure 4, déjà commentée, représente schématiquement le système masses ressorts constitué par le pétale de la figure 3.

## DESCRIPTION DETAILLEE DE L'INVENTION

## CREATION ET ABSORPTION DE LA CHALEUR

La création de chaleur est très importante dans un moteur haute puissance, à cause du frottement à sec entre ses éléments constitutifs. Par exemple, un moteur haute puissance d'une puissance mécanique de 5 kW produit une perte frictionnelle d'environ 4,5 kW. Puisque le moteur n'est pas lubrifié, toutes les pertes frictionnelles sont transformées en chaleur. La chaleur produite doit être emmagasinée par les matériaux en contact.

De plus, les moteurs possèdent généralement une limitation de leur rapport puissance sur masse. Ce rapport est généralement égal à 1kW par kg. Ainsi, le moteur ne possède pas beaucoup de masse pour pouvoir absorber la chaleur frictionnelle produite.

## REPARTITION DE LA CHALEUR

L'invention vise à améliorer la répartition de la chaleur entre les différents éléments du moteur haute puissance.

On rappelle que la diffusivité thermique $\kappa$ [en mm$^2$/s] est la grandeur déterminante dans cette répartition.

La chaleur générée pendant l'actionnement du moteur se partage entre les surfaces du triboélément « masselotte-rotor ».

On rappelle que le volume du rotor est fixe par conception. Par contre, seule la masse de la masselotte est fixée par conception, par exemple à 10 grammes chacune pour une puissance de 5 kW en sortie du moteur.

Ainsi, une chaleur de 220 000 Joules est par exemple générée avec une perte frictionnelle de 4,5 kW pendant un temps d'actionnement inférieur à 50 secondes. On peut également obtenir une valeur de la chaleur identique pour une séquence de plusieurs actionnements de quelques secondes.

La répartition de chaleur entre les différentes surfaces du triboélément dépend d'abord du rapport des deux surfaces en contact.

Le rapport des surfaces frottantes entre par exemple une structure comportant 32 masselottes (17176 mm$^2$) et par exemple les deux côtés de deux rotors (50990 mm$^2$) d'un moteur haute puissance est environ 1:2,96.

Pour calculer la répartition du flux de chaleur q de frottement générée dans le tribocontact des deux corps glissants, on peut appliquer la formule (1) suivante, parce que les deux surfaces ne diffèrent pas trop l'une par rapport à l'autre :

$$\frac{q_{1 masselotte}}{q_{2 rotors}} = \frac{\sqrt{\rho_1\ \lambda_1\ C_{p1}}}{\sqrt{\rho_2\ \lambda_2\ C_{p2}}} \qquad (1)$$

où $\rho$ représente fa densité du matériau considéré, $\lambda$ la conductivité thermique et $C_p$ la capacité thermique massique.

Cette formule (1) est valable pour deux triboéléments ayant sensiblement la même surface en contact et ayant les flux de chaleur q tels que

$$q_{rotor} + q_{masselotte} = 1.$$

La formule (1) montre que la répartition de la chaleur dépend en priorité des propriétés calorifiques des matériaux, tels que la conductivité, la capacité thermique massique et la densité volumique des matériaux de frottement. On rappelle de plus que ces propriétés dépendent de la température.

## DISSIPATION DE LA CHALEUR

Après que les pertes frictionnelles ont été reparties entre les éléments du moteur haute puissance, leurs dissipations deviennent importantes.

On rappelle qu'une grande quantité de chaleur est créée à l'interface entre la masselotte et le disque. Chaque masselotte est proche de matériaux actifs et/ou d'une colle par exemple, tous sensibles à la chaleur. Par exemple la colle sera du type polyimide dont la température de transition vitreuse est de l'ordre de 150°C. Ainsi, pour la masselotte, on souhaite un matériau qui possède à la fois une faible conductivité thermique et une grande chaleur massique. La faible conductivité thermique permet d'attirer vers la masselotte un minimum de la chaleur produite à l'interface. La grande chaleur massique permet d'emmagasiner un maximum de chaleur qui aurait quand même été transmise à la masselotte. Si les matériaux des masselottes possèdent les propriétés susmentionnées, alors il est possible de limiter leur température à celle que l'on s'est fixée, à savoir 150°C.

Ainsi, pour dissiper par exemple 220 000 Joules entre les rotors et les masselottes d'un moteur, on peut choisir les masselottes les matériaux prévus dans FR 2 844 933 et repris dans la partie introductive de la présente description.

La chaleur dissipée dans l'ensemble des massefattes ne doit pas excéder leurs capacité calorifique, de sorte que l'équation (2) soit remplie.

$$Q_{masselottes} \geq Q_{frictionnel} \left( \frac{q_{masselottes}}{q_{disques} + q_{masselottes}} \right) \qquad (2)$$

où $Q_{frictionnel}$ est la chaleur générée par frottement et $Q_{masselottes}$ est la capacité calorifique de l'ensemble des masselottes.

Pour le rotor, la situation est inverse de celle de la masselotte. Chaque masselotte a une masse définie (10 grammes avec $\pm$ 10% par exemple). Par contre, seul le volume du rotor est défini par conception.

Le rotor/disque n'est pas relié à des éléments sensibles à la chaleur. Par conséquent, pour le disque, on souhaite un matériau qui possède à la fois une grande conductivité thermique et une grande chaleur massique. La grande conductivité thermique permet d'attirer vers le disque un maximum de la chaleur produite à l'interface. La grande chaleur massique permet d'emmagasiner au maximum cette chaleur transmise au disque.

Les inventeurs ont remarqué que les alliages de Al, de Fe et d'au moins un autre élément (les alliages sont par conséquent notés AlFeXY, où X et Y représentent des éléments différents), les alliages comportant au moins sensiblement 80% en poids d'Al et au moins entre 0.1 et 15.0% en poids de Fe avaient des propriétés intéressantes de conductivité thermique et de capacités calorifique et thermique, reprises dans le tableau 1. Toutes les valeurs des capacités calorifiques présentés dans le Tableau 1 le sont pour des rotors de diamètre de 179 mm x 5 mm (il a donc un volume de 125.8 cm$^3$ environ, son épaisseur peut cependant varier entre 4 et 7 mm environ) et pour $\triangle$T=200 K. La connaissance de la variation de la température $\triangle$T permet d'obtenir la valeur absolue de la quantité de chaleur absorbée [kJ/dm$^3$] par un matériau. Le tableau 1 donne une valeur de 495 kJ/dm$^3$. Cette quantité ou capacité d'accumulation de chaleur doit être considérée comme une valeur volumétrique, parce que la place disponible pour un rotor est indépendante du matériau, et que les densités varient très fort d'un alliage à l'autre.

Tableau 1

| Matériaux | Densité [g/cm$^3$] | Conductivité thermique [W/mK] | Capacité calorifique [kJ/kg] (kJ/dm$^3$) | Capacité thermique volumique [J/cm$^3$/K] | Opération maximale [°C] | Capacité thermique massique [J/g/K] |
|---|---|---|---|---|---|---|
| AlFeXY | 3,02 | 100 | 164 (495) | 2,72 | 500 | 0,9 (1,1 à 500°C) |

Ces propriétés intéressantes sont dues notamment au fait que l'aluminium a une diffusivité comprise entre 70 et 80 mm$^2$/s. A titre de comparaison la fonte grise a une diffusivité comprise entre 10 et 15 mm$^2$/s, le TiAl6V4 a une diffusivité comprise entre 2,9 et 3,2 mm$^2$/s et l'Inconel 718 a une diffusivité comprise entre 2,5 et 2,9 mm$^2$/s.

Le type d'alliages d'aluminium précité a des capacités calorifiques complémentaires de celles des masselottes.

Plus précisément, l'alliage de Al, de Fe et d'au moins un autre élément est choisi parmi :

- un alliage Al-Fe-V-Si, avec entre 0,1 et 15% en poids de Fe, entre 0,3 et 15% en poids de V, entre 0,1 et 5% en poids de Si, le reste étant du Al, l'alliage étant préférentiellement l'alliage AA 8009, à savoir Al-8,5Fe-1,3V-1,7Si ; et/ou
- un alliage Al-Fe-Ce, avec entre 0,1 et 15 % en poids de Fe, entre 0,1 et 9 % en poids de Ce, le reste étant du Al, l'alliage étant préférentiellement l'alliage Al-8,3Fe-4,0Ce et/ou Al-7,0Fe-6,0Ce ; et/ou
- un alliage Al-Fe-V, avec entre 0,1 et 15 % en poids de Fe, entre 0,1 et 5 % en poids de V, le reste étant du Al, l'alliage étant préférentiellement l'alliage Al-12Fe-3V ; et/ou
- un alliage Al-Fe-Mo, avec entre 0,1 et 15 % en poids de Fe, entre 0,3 et 9 % en poids de Mo, le reste étant du Al, l'alliage étant préférentiellement l'alliage Al-8Fe-2Mo ; et/ou
- un alliage Al-Fe-Cr-Ti, avec entre 0,5 et 10 % en atomes de Fe, entre 0,4 et 8% en atomes de Cr, entre 0,3 et 5% en atomes de Ti, le reste étant du Al, l'alliage étant préférentiellement l'alliage Al84,5Fe7Gr6,3Ti2,5 ;
- un alliage de Al-Yb/Gdet de terres rares, avec entre 1,0 et 20 % en poids de Yb ou de Gd, et entre 0,1 et 1,0 % en poids de terres rares, l'alliage étant préférentiellement l'alliage Al14Yb4Y.

L'homme du métier sait qu'il existe plusieurs procédés possibles de fabrication d'un alliage. Ainsi, il est possible de réaliser les alliages précités par solidification rapide ou atomisation suivie par un tréfilage, pour atteindre des résistances à la rupture à température ambiante jusqu'à 1 600 MPa avec des matrices en aluminium amorphisées ou partiellement amorphisées (mélange crystallin-amorphe).

Cependant, ces procédés ne sont guère adaptés pour une fabrication de grands tonnages et une fabrication de pièces complexes nécessaires pour une application automobile ou aéronautique. De plus, la résistance à la rupture des alliages réalisés en solidification rapide diminue après un recuit et au-dessus d'une température de recristallisation, en générale supérieure à 300-350°C.

Il est proposé par la présente invention de réaliser le rotor/disque en alliage d'aluminium précité en coulée en gravité ou sous pression, suivi d'un dégazage sous vide dans un moule préchauffé entre 350-650°C. Ce procédé de fabrication peut être adapté à une fabrication de grands tonnages et une fabrication de pièces complexes nécessaires pour une application automobile ou aéronautique.

En variante, il est possible de fabriquer le rotor/disque en alliage d'aluminium précité par coulée en bande mince suivis de laminage et découpage. Cette variante présente l'avantage d'une réduction de la surépaisseur sur les pièces (à titre de comparaison, cette surépaisseur est en général nécessaire avec des pièces en fonte), et diminue d'autant le besoin d'usinage de la pièce, ce qui réduit les déchets de copeaux, dont la valeur économique est à considérer pour les alliages d'aluminium.

L'emploi des matériaux selon l'invention permet une fabrication plus simple et moins onéreuse des pièces du moteur.

Un autre avantage de réaliser les pièces par coulée et que la pièce « rotor-axe » peut être monobloc. Ainsi, le fait que le rotor + axe est en une seule pièce favorise le transfert de chaleur du rotor à l'axe qui lui-même possède une masse thermique capable d'emmagasiner les pertes frictionnelles. Ainsi, la capacité calorifique du rotor/disque est encore améliorée grâce à la conduction thermique vers l'arbre du moteur, qui est aussi dans un matériau possédant une grande capacité calorifique. La coulée du disque et de l'arbre en alliage en aluminium en une seule pièce représente un grand avantage, qui évite l'assemblage des deux pièces et ne perturbe pas le flux de la chaleur du disque/rotor vers l'axe. On peut encore améliorer ces performances en réalisant le carter du moteur dans le même alliage d'aluminium et en le reliant à l'arbre.

De façon préférentielle, les alliages en aluminium précités peuvent, juste avant la coulée, subir une étape d'affinage de grain et d'homogénéisation des grains en ajoutant dans l'alliage une quantité inférieure à 0,3 % en poids par rapport au poids total de la composition de Mg, Zr, Ce et/ou Sr (inoculation) et/ou une quantité inférieure à 0,05 % en poids de Nickel.

Pour une application dans un moteur et en comparaison avec une fonte grise, ces alliages en aluminium modifiés montrent, même réalisés seulement en coulée et en coulée en bande mince, une bonne résistance à la rupture à chaud (T<500°C). Leur résistance à la rupture est en effet comparable à celle de la fonte grise avec 3,7% en poids de [C], à savoir $R^{500°C}_m$ ~ 100 MPa et $R^{500°C}_{0,02}$ ~ 40 MPa. De plus, il n'y a pas pour ces alliages de formation de phases liquides pour une température de fusion inférieure à 600°C, tel que c'est le cas dans les systèmes Al-Si-Mg-Zn.

Les inventeurs ont aussi découvert que le module élastique de l'alliage Al84,5Fe7Cr6Ti2,5 réalisé en coulée en gravité présente un module d'Young E avec les valeurs

- à température ambiante $E^{RT}$ = 104,1 GPa ; et
- à 500°C $E^{500°C}$ = 83 GPa comparables à une fonte grise avec 3.7% en poids de [C], On constate que ces valeurs sont nettement supérieures (~44% à température ambiante) aux alliages en aluminium divulgués dans FR 2 844 933 (67-74 GPa des alliages Al-Si, Al-Mg, Al-Zn-Mg, Al-Cu par exemple).

Une coulée en gravité de Al8,5Fe1,3V1,7Si présente un module d'Young E avec les valeurs

- $E^{RT}$ = 85,7 GPa ; et
- $E^{500°C}$ = 65 GPa.

Ces résultats sont obtenus sans l'utilisation de particules, trichites ou fibres en céramiques.

Les alliages en aluminium modifiés dans une application de moteur présentent un gain intrinsèque en rigidité et en résistance à la rupture à chaud associés à une température opérationnelle allant jusqu'à 500°C. On comprend que cela représente un fort avantage technique, mais également économique.

Très préférentiellement, les matériaux de friction des masselottes et/ou du rotor/disque sont revêtus d'un matériau permettant d'augmenter leur dureté. Le matériau s'applique de préférence comme revêtement par projection thermique ou sont collés sur la masselotte monolithique et/ou le rotor/disque comme le préconise FR 2 844 93.

Les inventeurs ont constaté que les oxydes d'un alliage de Ti et de Cr, les oxydes étant sous forme d'une solution solide stabilisée et/ou sous forme d'une solution solide non-stoechiométrique ne présentaient pas l'inconvénient d'oxydation des matériaux de FR 2 844 933. Ce phénomène d'oxydation est en effet présent dans les phases magnéli $Ti_nO_{2n-1}$, avec $4 \leq n \leq 10$ par exemple.

La solution solide stabilisée de l'oxyde de l'alliage de Ti et de Cr se présente préférentiellement sous la forme $Ti_{n-2}Cr_2O_{2n-1}$ avec $6 \leq n \leq 9$.

La forme non-stoechiométrique de l'oxyde de l'alliage de Ti et de Cr se présente préférentiellement sous la forme d'une solution solide de $TiO_2$ et $Cr_2O_3$. Très préférentiellement ladite solution solide est sous une forme choisie parmi : $Cr_2Ti_2O_7$, $Ti_6Cr_2O_{15}$, $Ti_7Cr_2O_{17}$, $Cr_2Ti_8O_1$, $Cr_2Ti_5O_{13}$, $Cr_2Ti_4O_{11}$, $Cr_{0.12}Ti_{0.78}O_{1.74}$, $Cr_{0.222}Ti_{0.778}O_{1.889}$, $Cr_{0.286}Ti_{0.714}O_{1.857}$ OU $Cr_{0.46}Ti_{0.54}O_{1.77}$.

MICROCONTACT « COLLAGE » (OU « STICK ») ET « GLISSEMENT » (OU « SLIP »).

Le contact du tribosystème du moteur haute puissance effectue un mouvement rotatif elliptique, avec une évolution de pression et de vitesse de glissement.

Egalement, le matériau de chaque masselotte et de chaque rotor est revêtu en projection thermique par un matériau qui comporte du

- WC-17%Co ; et/ou

- (Ti,Mo)(C,N) ou (Ti,W)(C,N) + un liant Ni/Mo ; et/ou

- $>75Cr_3C_2/<25NiCr$ ; et/ou

- $4-6Al_2O_3/6-4TiO_2$.

Le mouvement se décompose en deux phases. Une phase « aller », avec glissement et pseudo-collage. Durant cette phase, la pression atteint son maximum (12 MPa pour un coefficient de frottement de 0,2) à une vitesse relativement faible (0.5 m/s maximum, puis une tendance vers 0). Cette phase correspond à une transmission de puissance ou de couple. Une autre phase « retour » où la vitesse de glissement atteint son maximum (environ 2.5 m/s) dans le sens opposé au précédent ou contre la direction de rotation du rotor. Durant cette phase, la pression descend aux alentours de 2 MPa. La durée totale d'un cycle est de 50 $\mu$s.

Le tableau 2 montre un découpage d'un cycle à 20 kHz de 50 $\mu$s en plusieurs périodes de fonctionnement que l'on appelle « phases ». Ce découpage a été effectué pour un moteur d'une puissance mécanique de 5 kW.

Le découpage d'un cycle selon le tableau 2 montre deux modes de contact pour le déplacement des micro-aspérités à la surface des matériaux. Premièrement, le contact peut s'effectuer selon une déflexion élastique des aspérités, dénommée ici « collage » (ou « stick » selon la terminologie anglo-saxonne généralement utilisée par l'homme du métier). Deuxièmement, le contact peut s'effectuer selon un glissement total (ou « sliding » ou « slip » selon la terminologie anglo-saxonne généralement utilisée par l'homme du métier).

Tableau 2

| Quantité | Aller | | | Retour | | |
|---|---|---|---|---|---|---|
| | Phase 1 | Phase 2 | Phase 3 | Phase 4 | Phase 5 | Phase 6 |
| $P_{moyenne}$ [MPa] | 9 | 11 | 8 | 5 | 2 | 2 |
| Vitesse glissement moyenne [m/s] | 0,37 | 0,012 | 0,064 | -0,0065 | -1 | -1,66 |
| Déplacement relatif [$\mu$m] | 3,92 | 0,106 | 0,422 | 0,001 | 10,8 | 19,3 |
| Mode du mouvement | Gliss. | Collage | Collage | Collage | Gliss. | Gliss. |
| Durée de la phase [$\mu$s] | 10,6 | 8,8 | 6,6 | 1,6 | 10,8 | 11,6 |

(suite)

| Quantité | Aller | | | Retour | | |
|---|---|---|---|---|---|---|
| | Phase 1 | Phase 2 | Phase 3 | Phase 4 | Phase 5 | Phase 6 |
| Distance de glissement pendant. Aller et Retour d'une onde [$\mu$m] | 4,45 | | | 30,1 | | |
| Vitesse de glissement moyenne [m/s] | 0,17 | | | -1,25 | | |
| Perte calorifique pour coefficient de frottement=0,30 [W/mm$^2$] | 0,11 | 0,039 | 0,15 | <0,01 | 0,6 | <1,2 |

Pour des déplacements inférieurs à 0,42 $\mu$m, les micro-aspérités collent et ne glissent pas. Elles sont résistantes à la fatigue, puisqu'elles sont sollicitées élastiquement. Dans ce cas de réponse élastique des micro-aspérités sans glissement, ou dans le mode de collage, l'énergie frictionnelle dissipée est nulle. Les quelques pertes se situent au niveau des petites pertes anélastiques de déformation des micro-aspérités.

Le retour de la masselotte pendant la deuxième phase du cycle s'effectue avec des densités calorifiques de l'ordre de 1 W/mm$^2$, tout en restant inférieures à cette valeur, sous des vitesses de glissement de l'ordre de 1,7 m/s, tout en restant inférieures à cette valeur.

Pour bien solliciter les micro-aspérités élastiquement, et ce sans rupture du contact, ce comportement étant typique des états de surfaces « polies », le rayon de courbure des micro-aspérités doit être « grand ». Un tel rayon de courbure est obtenu par usinage. Sous des grandes vitesses de glissement (de l'ordre de 1,66 m/s), le tribosystème va « s'autoroder ». Il présentera un état de surface avec une rugosité d'opération particulière. Les rayons de courbure des aspérités ont des valeurs déterminées par la vitesse. Ainsi, l'usinage permet d'obtenir une topographie prédéterminée par des essais sur moteurs. Les couches (dures) déposées par projection thermique doivent être usinées vers des rugosités arithmétiques finales inférieures à 0,04 $\mu$m. Cette rugosité permet d'éliminer une action abrasive et de minimiser l'auto-rodage (ou «running-in» selon la terminologie anglo-saxonne généralement utilisée). De préférence, puisque les revêtements présentent une porosité comprise entre 1 % en volume et 4 % en volume, les valeurs des rugosités $R_{pK}$ et $R_{vK}$ (définies selon la norme DIN EN ISO 13565-2:1998) doivent être inférieures à 0,030 $\mu$m et 0,070 $\mu$m respectivement. L'épaisseurs des couches usinées (épaisseur fartctionnelle) déposées par projection thermique est supérieure à 50 $\mu$m, et de préférence supérieure à 200 $\mu$m.

Les développements qui précèdent s'appliquent donc au mode de contact collage combiné avec une vitesse de glissement de l'ordre d'environ 1,25 m/s.

La détermination des valeurs de topographie des surfaces frottantes après les essais dans un moteur réel représente la seule méthode pour réduire le taux d'usure initial. Ainsi, si les aspérités sont sollicitées élastiquement, la topographie reste invariante dans le temps.

CAS PARTICULIER DE MOTEUR HAUTE PUISSANCE

Les développements qui suivent s'appliquent avantageusement à des cas de moteurs hautes puissances produisant des quantités de chaleur de 220 000 Joules pendant un actionnement d'un moteur haute puissance de 5 kW.

On résume dans les développements qui suivent l'ensemble des caractéristiques que doivent présenter les matériaux de friction.

PROPRIETES TRIBOLOGIQUES

Les matériaux ou les revêtements doivent présenter un coefficient de frottement statique et dynamique entre 0,2 et 0,8, notamment ils peuvent avoir une valeur de préférence entre 0,5 et 0,8.

De plus, ils doivent présenter des taux d'usure $k_v$ supérieurs à 1 10$^{-8}$ mm$^3$/Nm pour une quantité de chaleur Q égale à 220 000 Joules avec 2 000 heures de vie accumulée.

Ainsi ces valeurs sont :

- invariantes avec l'humidité relative
- invariantes à la température, et ce jusqu'à 200°C; et
- invariantes à des pressions de contact nominale P inférieures à 12 MPa.

Les valeurs de coefficient de frottement et de taux d'usure ne doivent jamais être inférieures aux valeurs minimales en fonction de la température, de la pression et de l'humidité relative.

De plus, les couples ne doivent pas présenter de mécanismes d'usures d'adhésion.

En outre, les coefficients de frottement statiques sont supérieurs aux coefficients de frottement dynamiques.

PROPRIETES MECANIQUES

Les matériaux ou les revêtements doivent présenter une résistance à la fatigue, et ce jusqu'à $1,4 \times 10^{11}$ cycles pour 2000 heures accumulées.

Les matériaux ou les revêtements doivent présenter une résistance au cisaillement à l'interface des revêtements qui a une valeur supérieure à 12 MPa.

PROPRIETES CALORIFIQUES

Les premiers points traités ci-après caractérisent le fait que l'on souhaite limiter la température de la masselotte ou du rotor.

Cas de la masselotte (masse constante)

Elle doit présenter une capacité thermique massique $Cp^{22C}$ supérieure à 0,35 J/g/K et de préférence supérieure ou égale à 0.5 J/g/K.

Alternativement, de préférence, pour une augmentation de la température de $\triangle T= 150K$, elle doit présenter une capacité thermique massique $Cp^{22C}$ supérieure à 52,5 J/g. Ces valeurs sont dérivées de FR 2 844 933.

Il est à noter que dans un futur relativement proche, une évolution des matériaux actifs, notamment piézo-électriques permettra sans doute des températures de Curie plus élevées.

Cas du rotor (volume constant)

Si le rotor est conçu pour pouvoir accumuler le maximum de chaleur, alors il doit présenter une capacité calorifique supérieure à 2 J/cm$^3$/K soit 400 J/cm$^3$ pour $\Delta T= 200K$. De préférence, elle sera supérieure ou égale à 2.5 J/cm$^3$/K, soit 500 J/cm$^3$ pour $\Delta T= 200K$. Avec les matériaux de la présente invention, le tableau 1 donne une valeur de 2.72 J/cm$^3$/K.

Les conditions précédentes sur les masselottes et les rotors sont alternatives. Elles peuvent également préférentiellement être cumulatives, les masselottes, les rotors vérifiant alors une des conditions précédentes respectivement.

Si par contre le rotor est conçu pour minimiser son poids, alors le rapport capacité calorifique/poids du rotor doit être supérieur à 70 J/g pour une augmentation de température de $\triangle T=200$ K.

Le point suivant caractérise le fait que l'on souhaite une capacité d'accumulation de la chaleur maximale par la masselotte.

Rapport des diffusivités

La chaleur frictionnelle dissipée dans l'ensemble des masselottes ne doit pas excéder la capacité calorifique des masselottes $Q_{masselottes}$ pour $\Delta T=150$ K en respectant l'équation (2).

Le dernier point caractérise le fait que l'on souhaite minimiser la température de la masselotte.

Rapport de répartition des flux de chaleur

La température de la masselotte est minimisée par une maximisation du rapport de la répartition du flux de chaleur vers le rotor, cette répartition étant conforme à l'équation (1).

RESISTANCE A LA CORROSION

Tous les matériaux et couches de revêtements doivent être résistants à long terme, ou insensibles à la corrosion et à l'humidité. Ils peuvent de plus présenter des propriétés de passivation.

**Revendications**

**1.** Système, notamment adapté pour les moteurs hautes puissances, comportant au moins un rotor (1a; 1b) et des moyens (4a, 4b ; 5a, 5b) comportant des éléments actifs (7, 8) aptes à mettre en rotation le/les rotor(s) (1 a ; 1 b) par leur déformation synchronisée, **caractérisé en ce que** le matériau du rotor est choisi parmi :

- un alliage Al-Fe-V-Si, avec entre 0,1 et 15% en poids de Fe, entre 0,3 et 15% en poids de V, entre 0,1 et 5% en poids de Si, le reste étant du Al ; et/ou
- un alliage Al-Fe-Ce, avec entre 0,1 et 15 % en poids de Fe, entre 0,1 et 9 % en poids de Ce, le reste étant du Al ; et/ou
- un alliage Al-Fe-Mo, avec entre 0,1 et 15 % en poids de Fe, entre 0,3 et 9 % en poids de Mo, le reste étant du Al ; et/ou
- un alliage de Al-Yb/Gd et de terres rares, avec entre 1,0 et 20 % en poids de Yb ou de Gd, et entre 0,1 et 1,0 % en poids de terres rares; et/ou
- un alliage Al-Fe-Cr-Ti, avec entre 0,5 et 10% en atomes de Fe, entre 0,4 et 8% en atomes de Cr, entre 0,3 et 5% en atomes de Ti, le reste étant du Al; et/ou
- un alliage Al-Fe-V, avec entre 0,1 et 15 % en poids de Fe, entre 0,1 et 5 % en poids de V, le reste étant du Al, l'alliage comportant des grains affinés et homogénéisés et comportant une quantité inférieure à 0,3 % en poids par rapport au poids total de l'alliage de Mg, Zr, Ce et/ou Sr (inoculation) et/ou une quantité inférieure à 0,05 % en poids de Ni, l'alliage étant préférentiellement l'alliage Al-12Fe-3V.

2. Système selon la revendication précédente, dans lequel l'alliage est l'alliage AA 8009, à savoir Al-8,5Fe-1,3V-1,7Si, et/ou l'alliage Al-8,3Fe-4,0Ce et/ou Al-7,0Fe-6,0Ce et/ou l'alliage Al-8Fe-2Mo et/ou l'alliage Al14Yb4Y et/ou l'alliage Al84,5Fe7Cr6,3Ti2,5.

3. Système selon l'une des revendications précédentes, dans lequel l'alliage présente des grains affinés et homogénéisés et comporte une quantité inférieure à 0,3 % en poids par rapport au poids total de l'alliage de Mg, Zr, Ce et/ou Sr (inoculation) et/ou une quantité inférieure à 0,05 % en poids de Ni.

4. Système selon l'une des revendications précédentes, dans lequel le matériau de chaque rotor (1a ; 1b) est tel qu'il présente une capacité calorifique supérieure à 2 J/cm$^3$/K.

5. Système selon l'une des revendications précédentes, dans lequel lesdits moyens de mise en rotation du/des rotor(s) comportent au moins un pétale (6) comportant une masselotte (11), le matériau de chaque masselotte (11) étant tel qu'elle présente une capacité thermique massique $Cp^{22C}$ supérieure à 0,35 J/g/K.

6. Système selon l'une des revendications précédentes, dans lequel le matériau de chaque masselotte (11) comporte :

- du (Ti,Mo)(C,N) + 8-20 % de liant Ni/Mo ; et/ou
- du WC-6Ni ; et/ou
- de l'alumine renforcée par de la zircone ; et/ou
- de l'AlN ; et/ou
- du carbure de silicium infiltré au silicium SiSiC, avec 8-20% en poids de silicium ; et/ou
- MgO-ZrO$_2$ ; et/ou
- de l'alumine renforcée par de la zircone ; et/ou
- du nitrure l'aluminium par frittage à chaud ; et/ou
- du nitrure l'aluminium par frittage sous pression ; et/ou-
- une phase magnéli sous forme de Ti$_n$O$_{2n-1}$, où $4 \leq n \leq 10$ avec n entier, ou sous forme de mélange du type 40% Ti$_4$O$_7$/60% Ti$_5$O$_9$.
- des fontes grises globulaires et/ou des fontes grises lamellaires et/ou avec une trempe bainitique et/ou alliées par Cr, Mo, Al, V, Ti ; et/ou
- des aciers du type Z6CND16-05-01 ; et/ou
- des aciers du type X5CrNiCu15-5 ; et/ou
- des alliages AlSi + SiC/Al$_2$O$_3$ ; et/ou
- des alliages AlSi + des dispersoïdes Al$_4$C$_3$/Al$_2$O$_3$/TiB$_2$; et/ou
- des alliages Al-Fe-V ; et/ou
- de l'aluminiums série 6xxx en T6 et, plus, ou de série 7xxx ; et/ou
- du carbure de silicium infiltré au silicium SiSiC ; et/ou
- des alliages de titanium de type UNS R5xxxx.

7. Système selon l'une des revendications précédentes, dans lequel le matériau de chaque masselotte (11) et de chaque rotor (1a; 1b) est revêtu d'au moins une couche dure en projection thermique par un matériau qui comporte :

- un oxyde d'un alliage de Ti et de Cr, l'oxyde étant sous forme d'une solution solide stabilisée et/ou sous forme d'une solution solide non-stoechiométrique ; et/ou
- du WC-17%Co ; et/ou
- du (Ti,Mo)(C,N) ou (Ti,W)(C,N) + un liant Ni/Mo ; et/ou
- du $>75Cr_3C_2/<25NiCr$ ; et/ou
- du $4-6Al_2O_3/6-4TiO_2$.

**8.** Système selon la revendication précédente, dans lequel la solution solide stabilisée de l'oxyde de l'alliage de Ti et de Cr se présente sous la forme $Ti_{n-2}Cr_2O_{2n-1}$ avec $6 \leq n \leq 9$ et/ou dans lequel la forme non-stoechiométrique de l'oxyde de l'alliage de Ti et de Cr se présente sous la forme d'une solution solide de $TiO_2$ et $Cr_2O_3$, préférentiellement sous une forme choisie parmi : $Cr_2Ti_2O_7$, $Ti_6Cr_2O_{15}$, $Ti_7Cr_2O_{17}$, $Cr_2Ti_8O_1$, $Cr_2Ti_5O_{13}$, $Cr_2Ti_4O_{11}$, $Cr_{0.12}Ti_{0.78}O_{1.74}$, $Cr_{0.222}Ti_{0.778}O_{1.889}$, $Cr_{0.286}Ti_{0.714}O_{1.857}$ ou $Cr_{0.46}Ti_{0.54}O_{1.77}$.

**9.** Système selon l'une des revendications 7 ou 8, dans lequel les couches dures déposées par projection thermique présentent des valeurs de rugosités arithmétiques finales inférieures à 0,04 $\mu$m, l'épaisseur des couches usinées étant supérieures à 50 $\mu$m et/ou dans lequel les valeurs des rugosités $R_{pK}$ et $R_{vK}$ définies dans la norme DIN EN ISO 13565-2:1998 sont inférieures à 0,030 $\mu$m et 0,070 $\mu$m respectivement.

**10.** Système selon l'une des revendications précédentes, dans lequel le rotor (1a, 1 b) et un arbre (3) de rotation du rotor sont monobloc et sont composés du même matériau.

**11.** Système selon la revendication précédente, dans lequel un carter (2) de protection du moteur est relié à l'arbre de rotation (3) et est composé du même matériau que le rotor.

**Claims**

**1.** A system, notably suitable for high power motors, including at least one rotor (1a; 1b) and means (4a, 4b; 5a, 5b) including active components (7, 8) capable of setting into rotation the rotor(s) (1a; 1b) by their synchronized deformation, **characterized in that** the material of the rotor is selected from:

- an Al-Fe-V-Si alloy, with between 0.1 and 15% by weight of Fe, between 0.3 and 15% by weight of V, between 0.1 and 5% by weight of Si, the remainder being Al; and/or
- an Al-Fe-Ce alloy, with between 0.1 and 15% by weight of Fe, between 0.1 and 9% by weight of Ce, the remainder being Al; and/or
- an Al-Fe-Mo alloy, with between 0.1 and 15% by weight of Fe, between 0.3 and 9% by weight of Mo, the remainder being Al; and/or
- an alloy of Al-Yb/Gd and rare earths, with between 1.0 and 20% by weight of Yb or Gd, and between 0.1 and 1.0% by weight of rare earths; and/or
- an Al-Fe-Cr-Ti alloy, with between 0.5 and 10% of Fe atoms, between 0.4 and 8% of Cr atoms, between 0.3 and 5% of Ti atoms, the remainder being Al; and/or
- an Al-Fe-V alloy with between 0.1 and 15% by weight of Fe, between 0.1 and 5% by weight of V, the remainder being Al, the alloy including refined and homogenized grains and including an amount of Mg, Zr, Ce and/or Sr (inoculation) of less than 0.3% by weight, based on the total weight of the alloy, and/or an amount of Ni of less than 0.05% by weight, the alloy preferentially being the Al-12Fe-3V alloy.

**2.** The system according to the preceding claim, wherein the alloy is the AA 8009 alloy, i.e. Al-8.5Fe-1.3V-1.7Si, and/or the alloy Al-8.3Fe-4.0Ce and/or Al-7.0Fe-6.0Ce and/or the alloy Al-8Fe-2Mo and/or the alloy Al14Yb4Y and/or the alloy Al84.5Fe7Cr6.3Ti2.5.

**3.** The system according to the preceding claims, wherein the alloy has refined and homogenized grains and includes an amount of Mg, Zr, Ce and/or Sr (inoculation) of less than 0.3% by weight, based on the total weight of the alloy, and/or an amount of Ni of less than 0.05% by weight.

**4.** The system according to the preceding claims, wherein the material of each rotor (1a; 1b) is such that it has a heat capacity of more than 2 $J/cm^3/K$.

**5.** The system according to the preceding claims, wherein said means for setting the rotor(s) into rotation include at least one petal (6) including a balance weight (11), the material of each balance weight (11) being such that it has a mass heat capacity $Cp^{22C}$ larger than 0.35 J/g/K.

**6.** The system according to any of the preceding claims, wherein the material of each balance weight (11) includes:

- (Ti, Mo)(C,N) + 8-20% of Ni/Mo binder; and/or
- WC-6Ni; and/or
- alumina strengthened with zirconia, and/or
- AlN; and/or
- silicon-infiltrated silicon carbide SiSiC, with 8-20% by weight of silicon; and/or
- $MgO-ZrO_2$; and/or
- alumina strengthened with zirconia; and/or
- aluminium nitride obtained by hot sintering; and/or
- aluminium nitride obtained by high pressure sintering; and/or
- a Magneli phase as $Ti_nO_{2n-1}$, wherein $4 \leq n \leq 10$ with n being an integer, or as a mixture of the $40\%Ti_4O_7$/ $60\%Ti_5O_9$ type,
- globular grey cast irons and/or lamellar grey cast ions and/or with bainitic quenching and/or alloyed with Cr, Mo, Al, V, Ti and/or
- steels of the Z6CND16-05-01 type; and/or
- steels of the X5CrNiCul5-5 type; and/or
- AlSi + $SiC/Al_2O_3$ alloys; and/or
- AlSi alloys + $Al_4C_3/Al_2O_3/TiB_2$ dispersoids; and/or
- Al-Fe-V alloys; and/or
- aluminiums of series 6xxx T6 and above, or of series 7xxx; and/or
- silicon-infiltrated silicon carbide SiSiC; and/or
- titanium alloys of the UNS R5xxxx type.

**7.** The system according to any of the preceding claims, wherein the material of each balance weight (11) and of each rotor (1a; 1b) is coated with at least one hard layer by thermal projection of a material which includes:

- an oxide of a Ti and Cr alloy, the oxide being in the form of a stabilized solid solution and/or in the form of a non-stoichiometric solid solution; and/or
- WC-17%Co; and/or
- (Ti, Mo) (C,N) or (Ti,W) (C,N) + a Ni/Mo binder; and/or
- $>75Cr_3C_2/<25NiCr$; and/or
- $4-6Al_{2<}O_3/6-4TiO_2$.

**8.** The system according to the preceding claim, wherein the stabilized solid solution of the oxide of the Ti and Cr alloys appears as $Ti_{n-2}Cr_2O_{2n-1}$ with $6 \leq n \leq 9$ and/or wherein the non-stoichiometric form of the oxide of the Ti and Cr alloy appears as a solid solution of $TiO_2$ and $Cr_2O_3$, preferentially in a form selected from:

$Cr_2Ti_2O_7$, $Ti_6Cr_2O_{15}$, $Ti_7Cr_2O_{17}$, $Cr_2Ti_8O_1$, $Cr_2Ti_5O_{13}$, $Cr_2Ti_4O_{11}$, $Cr_{0.12}Ti_{0.78}O_{1.74}$, $Cr_{0.222}Ti_{0.778}O_{1.889}$, $Cr_{0.286}Ti_{0.714}O_{1.857}$ or $Cr_{0\cdot46}Ti_{0.54}O_{1.77}$.

**9.** The system according to any of claims 7 or 8, wherein the hard layers deposited by thermal projection have values of final arithmetic roughnesses of less than 0.04 $\mu$m, the thickness of the machined layers being greater than 50 $\mu$m and/or wherein the values of the roughnesses $R_{pK}$ and $R_{vK}$ as defined in the DIN EN ISO 13565-2:1998 standard are less than 0.030 $\mu$m and 0.070 $\mu$m, respectively.

**10.** The system according to any of the preceding claims, wherein the rotor (1a, 1b) and a rotation shaft (3) of the rotor are in a single piece and are made up from the same material.

**11.** The system according to the preceding claim, wherein a protective case (2) of the motor is connected to the rotation shaft (3) and is made up of the same material as the rotor.

**Patentansprüche**

1. Vor allem für Hochleistungsmotoren geeignetes System, das mindestens einen Rotor (1a; 1b) und Mittel (4a, 4b; 5a, 5b) mit aktiven Elementen (7, 8) umfasst, die imstande sind, den/die Rotor/en (1a; 1 b) durch ihre synchronisierte Deformation in Rotation zu versetzen, **dadurch gekennzeichnet, dass** der Werkstoff des Rotors ausgewählt ist aus:

   - einer Al-Fe-V-Si-Legierung mit zwischen 0,1 und 15 Gew.-% Fe, zwischen 0,3 und 15 Gew.-% V, zwischen 0,1 und 5 Gew.-% Si, wobei der Rest Al ist; und/oder
   - einer Al-Fe-Ce-Legierung mit zwischen 0,1 und 15 Gew.-% Fe, zwischen 0,1 und 9 Gew.-% Ce, wobei der Rest Al ist; und/oder
   - einer Al-Fe-Mo-Legierung mit zwischen 0,1 und 15 Gew.-% Fe, zwischen 0,3 und 9 Gew.-% Mo, wobei der Rest Al ist; und/oder
   - einer Al-Yb/Gd-Legierung und seltener Erden mit zwischen 1,0 und 20 Gew.-% Yb oder Gd und zwischen 0,1 und 1,0 Gew.-% seltene Erden; und/oder
   - einer Al-Fe-Cr-Ti-Legierung mit zwischen 0,5 und 10% Fe-Atomen, zwischen 0,4 und 8 % Cr-Atomen, zwischen 0,3 und 5 % Ti-Atomen, wobei der Rest Al ist; und/oder
   - einer Al-Fe-V-Legierung mit zwischen 0,1 und 15 Gew.-% Fe, zwischen 0,1 und 5 Gew.-% V, wobei der Rest Al ist, wobei die Legierung gefeinte und homogenisierte Körner umfasst und weniger als 0,3 Gew.-% im Verhältnis zum Gesamtgewicht der Legierung von Mg, Zr, Ce und/oder Sr (Inokulation) umfasst und/oder weniger als 0,05 Gew.-% Ni, wobei die Legierung vorzugsweise die Legierung Al-12Fe-3V ist.

2. System nach vorangehendem Anspruch, wobei die Legierung die AA 8009-Legierung ist, nämlich Al-8,5Fe-1,3V-1,7Si, und/oder die Legierung Al-8,3Fe-4,0Ce und/oder Al-7,0Fe-6,0Ce und/oder die Legierung Al-8Fe-2Mo und/oder die Legierung Al14Yb4Y und/oder die Legierung A184,5Fe7Cr6,3Ti2,5.

3. System nach einem der vorangehenden Ansprüche, wobei die Legierung gefeinte und homogenisierte Körner aufweist und weniger als 0,3 Gew.-% im Verhältnis zum Gesamtgewicht der Legierung von Mg, Zr, Ce und/oder Sr (Inokulation) umfasst und/oder weniger als 0,05 Gew.-% Ni.

4. System nach einem der vorangehenden Ansprüche, wobei der Werkstoff jedes Rotors (1a; 1b) derart ist, dass er eine Wärmekapazität von über 2 J/cm$^3$/K aufweist.

5. System nach einem der vorangehenden Ansprüche, wobei die Rotationsmittel des/der Rotor/s/en mindestens ein Blatt (6) umfassen, das ein Gewicht (11) umfasst, wobei der Werkstoff jedes Gewichts (11) derart ist, dass es eine spezifische Wärmekapazität $Cp^{22C}$ von über 0,35 J/g/K aufweist.

6. System nach einem der vorangehenden Ansprüche, wobei der Werkstoff jedes Gewichts (11) umfasst:

   - (Ti,Mo)(C,N) + 8-20 % Ni/Mo-Binder; und/oder
   - WC-6Ni; und/oder
   - zirkonverstärktes Aluminiumoxid; und/oder
   - AlN; und/oder
   - siliciuminfiltriertes Siliciumcarbid SiSiC mit 8-20 Gew.-% Silizium; und/oder
   - MgO-ZrO$_2$; und/oder
   - zirkonverstärktes Aluminiumoxid; und/oder
   - Aluminiumnitrid durch Warmsintern; und/oder
   - Aluminiumnitrid durch Sintern unter Druck; und/oder
   - eine Magneli-Phase in Form von Ti$_n$O$_{2n-1}$, wobei $4 \leq n \leq 10$ mit n Ganzzahl, oder in Gemischform des Typs 40%Ti$_4$O$_7$/60%Ti$_5$O$_9$,
   - globularen Grauguss und/oder lamellaren Grauguss und/oder mit Austempern und/oder legiert mit Cr, Mo, Al, V, Ti; und/oder
   - Stähle vom Typ Z6CND16-05-01; und/oder
   - Stähle vom Typ X5CrNiCu15-5; und/oder
   - Legierungen AlSi + SiC/Al$_2$O$_3$; und/oder
   - AlSi-Legierungen + Al$_4$C$_3$/Al$_2$O$_3$/TiB$_2$-Dispersoide; und/oder
   - Al-Fe-V-Legierungen; und/oder
   - Aluminium der Gruppe 6xxx T6 und höher und der Gruppe 7xxx; und/oder
   - siliciuminfiltriertes Siliciumcarbid SiSiC; und/oder

- Titanlegierungen vom Typ UNS R5xxxx.

7. System nach einem der vorangehenden Ansprüche, wobei der Werkstoff jedes Gewichts (11) und jedes Rotors (1a; 1b) mit mindestens einer harten Schicht durch thermischer Projektion mit einem Werkstoff beschichtet ist, der umfasst:

- ein Oxid einer Ti- und Cr-Legierung, wobei das Oxid in Form einer stabilisierten festen Lösung und/oder in Form einer nicht-stöchiometrischen festen Lösung vorliegt; und/oder
- WC-17%Co; und/oder
- (Ti,Mo)(C,N) oder (Ti,W)(C,N) + einen Ni/Mo-Binder; und/oder
- >75$Cr_3C_2$/<25NiCr; und/oder
- 4-6$Al_2O_3$/6-4$TiO_2$.

8. System nach vorangehendem Anspruch, wobei die stabilisierte feste Lösung des Oxids der Ti- und Cr-Legierung in Form von $Ti_{n-2}Cr_2O_{2n-1}$ vorliegt mit 6≤n≤9 und/oder wobei die nicht-stöchiometrische Form des Oxids der Ti- und Cr-Legierung in Form einer festen $TiO_2$- und $Cr_2O_3$-Lösung vorliegt, vorzugsweise in einer Form, die aus $Cr_2Ti_2O_7$, $Ti_6Cr_2O_{15}$, $Ti_7Cr_2O_{17}$, $Cr_2Ti_8O_1$, $Cr_2Ti_5O_{13}$, $Cr_2Ti_4O_{11}$, $Cr_{0.12}Ti_{0.78}O_{1.74}$, $Cr_{0.222}Ti_{0.778}O_{1.889}$, $Cr_{0.286}Ti_{0.714}O_{1.857}$ oder $Cr_{0.46}Ti_{0.54}O_{1.77}$ ausgewählt ist.

9. System nach einem der Ansprüche 7 oder 8, wobei die durch thermische Projektion aufgebrachten harten Schichten abschließende arithmetische Rauhigkeitswerte von unter 0,04 $\mu$m aufweisen, wobei die Dicke der bearbeiteten Schichten über 50 $\mu$m ist und/oder wobei die in der Norm DIN EN ISO 13565-2:1998 definierten Rauheitswerte $R_{pK}$ und $R_{vK}$ jeweils unter 0,030 $\mu$m und 0,070 $\mu$m sind.

10. System nach einem der vorangehenden Ansprüche, wobei der Rotor (1a, 1b) und eine Rotationswelle (3) des Rotors im Block gefertigt sind und aus demselben Werkstoff bestehen.

11. System nach vorangehendem Anspruch, wobei ein Schutzgehäuse (2) des Motors mit der Rotationswelle (3) verbunden ist und aus demselben Werkstoff wie der Rotor besteht.

FIG_1

FIG_2

FIG.3

FIG_4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2782420
- FR 2819650
- FR 2844933
- FR 284493